# EUROPEAN PATENT APPLICATION

(11) **EP 4 318 765 A1**
(43) Date of publication of application: **07.02.2024**
(21) Application number: 22911654.6
(22) Date of filing: 23.11.2022
(51) Int. Cl.: H01M 50/267, B60L 53/80

(54) **BATTERY PACK MANAGEMENT SYSTEM**

(30) Priority: 24.12.2021 KR 20210187420
(71) Applicant: LG ENERGY SOLUTION, LTD., Seoul 07335 (KR)
(72) Inventor: KONG, Seungjin, Daejeon 34122 (KR); UM, Taeki, Daejeon 34122 (KR); LEE, Jung Hoon, Daejeon 34122 (KR)
(74) Representative: Plasseraud IP
(86) International application number: PCT/KR2022/018652
(87) International publication number: WO 2023/121018

(57) **Abstract**

A battery pack management system according to one embodiment of the present disclosure includes a housing in which a battery pack is housed; a hinge unit formed in the housing; and a charging connector unit connected by a hinge unit and a wire, wherein, when the battery pack is inserted through an inlet port of the housing, the hinge unit moves the charging connector unit if the battery pack is equal to or larger than a predetermined size.

## Description

### [TECHNICAL FIELD]

### Cross Citation with Related Application(s)

This application claims the benefit of Korean Patent Application No. 10-2021-0187420 filed on December 24, 2021 with the Korean Intellectual Property Office, the entire contents of which are incorporated herein by reference.

The present disclosure relates to a battery pack management system, and more particularly, to a battery pack management system that can charge battery packs of various sizes.

### [BACKGROUND]

In modem society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Meanwhile, the need for secondary batteries used in automobiles, which are medium-sized or large-sized devices, is increasing day by day, but the long charging time of large-capacity batteries is becoming an obstacle to popularization. Accordingly, market interest in a battery swapping system (BSS), which is a system which the user does not directly charge the battery but visits a charging station to replace a pre-charged battery, has increased in recent years.

Such a battery swapping system pre-charges the battery on the battery swapping system to provide a fully charged battery in response to the user's request. However, since a charging slot of a typical battery swapping system can charge only one size of battery, slots of different sizes must be provided by plural numbers in the battery swapping system to meet the demand for batteries of various sizes. In this case, when the user demands are different depending on the size, the amount of usage between slots is different, which causes a problem that the efficiency is not maximized.

Therefore, in order for the battery swapping system to be firmly fixed, there is a need to provide a battery swapping system that can charge batteries of different sizes.

### [DETAILED DESCRIPTION OF THE INVENTION]

### [Technical Problem]

It is an object of the present disclosure to provide a battery pack management system that can charge battery packs of various sizes.

The objects of the present disclosure are not limited to the aforementioned objects, and other objects which are not mentioned herein should be clearly understood by those skilled in the art from the following detailed description and the accompanying drawings.

### [Technical Solution]

According to one embodiment of the present disclosure, there is provided a battery pack management system comprising: a housing in which a battery pack is housed; a hinge unit formed in the housing; and a charging connector unit connected by a hinge unit and a wire, wherein, when the battery pack is inserted through an inlet port of the housing, the hinge unit moves the charging connector unit if the battery pack is equal to or larger than a predetermined size.

The hinge unit may be formed adjacent to an upper part of the housing.

The hinge unit may be formed on an inner side surface of the upper part of the housing.

The battery pack management system according to the present embodiment is configured such that, if the size of the battery pack is larger than the size of a space between the lower part of the housing and the hinge unit, the hinge unit can move the charging connector unit.

The battery pack management system according to the present embodiment is configured such that the hinge unit pulls the wire, and the charging connector unit connected to the wire is uplifted, so that the charging connector unit and the charging terminal unit of the battery pack can be arranged to correspond to each other.

The hinge unit may comprise a hinge rotation unit that contacts the battery pack when the battery pack is inserted, and a hinge fixing portion that is connected to the hinge rotation unit and determines a maximum value of a rotation radius of the hinge rotation unit.

The hinge unit may further comprise a wire pulling plate that is connected to the wire and rotates together with the hinge rotation unit, and a rail portion to which one end of the wire pulling plate moves.

The wire pulling plate may comprise a sliding portion that moves along the rail portion.

"The hinge unit moves the charging connector unit" may mean that the wire pulling plate moves along the rail portion and raises the charging connector unit.

The rail portion is formed in a direction opposite to the charging connector unit, the wire pulling plate moves along the rail portion in a direction opposite to the charging connector unit, and the wire moves, and the position of the charging connector unit may be changed by the wire.

The battery pack management system according to another embodiment of the present disclosure is configured such that the rail portion is formed to be adjacent to the upper part of the housing, and the rail portion may be fixed onto the housing by a fixing part.

The battery pack management system according to the present embodiment may comprise a battery swapping system.

### [Advantageous Effects]

The battery pack management system according to embodiments of the present disclosure can fully charge battery packs of different sizes and provide users with fully charged battery packs of various sizes, thereby maximizing space efficiency and user convenience.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

Fig. 1 is a diagram showing a state in which a first battery pack is housed in a battery pack management system according to one embodiment of the present disclosure;
Fig. 2 is a diagram showing a cross section cut along the line A-A' of Fig. 1;
Fig. 3 is a diagram showing the hinge unit of Fig. 1;
Fig. 4 is a diagram showing a state in which a second battery pack is housed in a battery pack management system according to one embodiment of the present disclosure;
Fig. 5 is a diagram showing a cross section cut along the line B-B' of Fig. 4;
Fig. 6 is a diagram showing the hinge unit of Fig. 5; and
Fig. 7 is a diagram showing a battery pack management system according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

The terms "first," "second," etc. are used to explain various components, but the components should not be limited by the terms. These terms are only used to distinguish one component from the other component.

Now, the battery pack management system according to one embodiment of the present disclosure will be described.

A battery pack management system according to an embodiment is configured so as to charge a plurality of battery cells (e.g., lithium ion secondary battery cells) included in a battery pack and supply the battery pack to consumers. For example, the battery pack management system may consist of a so-called battery swapping system (battery swapping station, BSS) that can separate exhausted battery packs from electric vehicles and provide battery packs containing pre-charged battery cells, if a user who uses an electric vehicle needs to exchange the battery pack. Of course, the battery pack management system of the present disclosure is not limited to the battery swapping system.

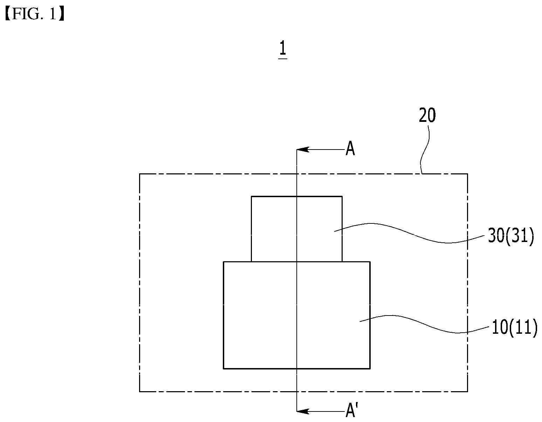

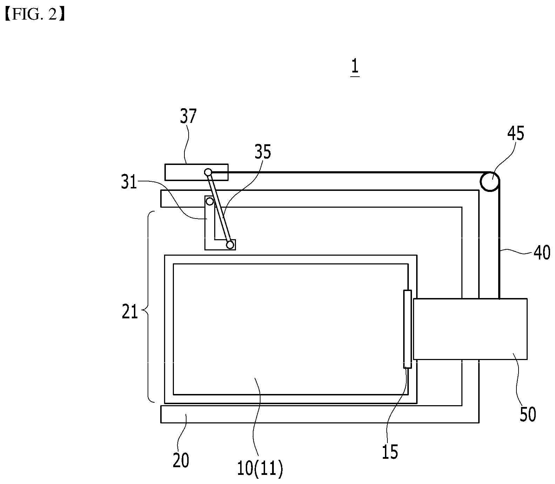

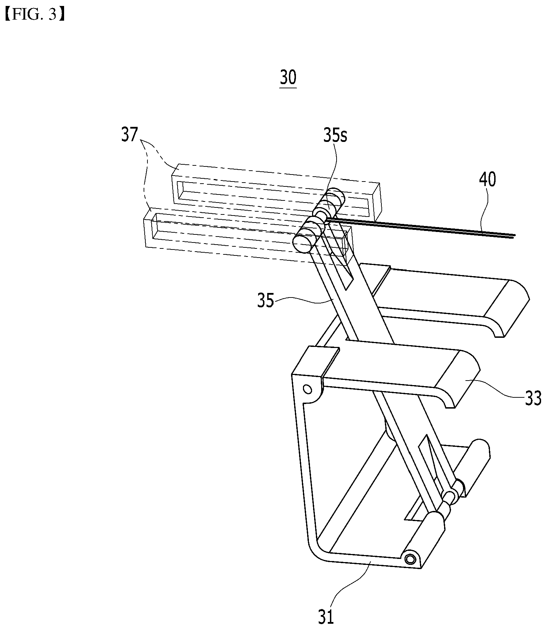

Fig. 1 is a diagram showing a state in which a first battery pack is housed in a battery pack management system according to one embodiment of the present disclosure. Fig. 2 is a diagram showing a cross section cut along the line A-A' of Fig. 1. Fig. 3 is a diagram showing the hinge unit of Fig. 1.

Referring to Figs. 1 to 3, a battery pack management system 1 according to one embodiment of the present disclosure includes a housing 20 in which the battery pack 10 is housed, a hinge unit 30 formed in the housing 20 and a charging connector unit 50 connected by a hinge unit 30 and a wire 40.

The battery pack 10 may be formed to include a plurality of battery cells. The battery pack 10 may include a charging terminal unit 15 that is connected to the charging connector unit 50 of the battery pack management system 1.

At this time, Figs. 1 to 3 show a first operation state in which the first battery pack 11 is housed in the battery pack management system 1. Referring to Fig. 1, it can be confirmed that the hinge unit 30 is not rotated in the battery pack management system 1 as viewed from the direction in which the inlet port 21 of the housing 20 is formed. In the first operation state, since the size of the first battery pack 11 is smaller than the size of the space between the lower part of the housing 20 and the hinge unit 30, it is possible to match the charging terminal unit 15 of the first battery pack 11 and the charging connector unit 50 with each other without moving the charging connector unit 50 by the hinge unit 30.

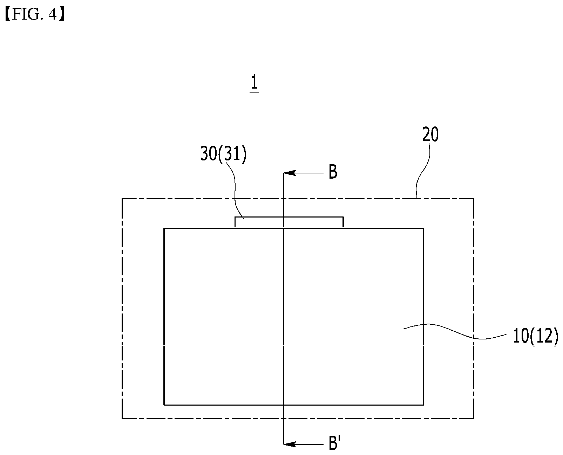

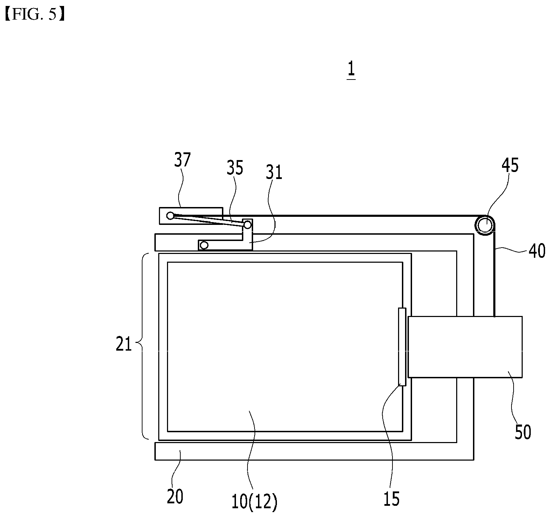

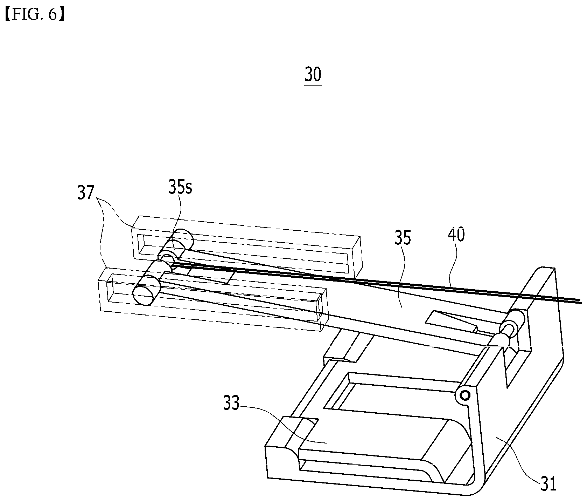

Fig. 4 is a diagram showing a state in which a second battery pack is housed in a battery pack management system according to one embodiment of the present disclosure. Fig. 5 is a diagram showing a cross section cut along the line B-B' of Fig. 4. Fig. 6 is a diagram showing the hinge unit of Fig. 5.

Figs. 4 to 6 show a second operation state in which the second battery pack 12 is housed in the battery pack management system 1. Referring to Fig. 4, it can be confirmed that in the battery pack management system 1 as viewed from the direction in which the inlet port 21 of the housing 20 is formed, the hinge unit 30 rotates and thus the size of the hinge unit 30 is shown small. In particular, referring to Figs. 4 to 6, in the second operation state, since the size of the second battery pack 12 is larger than the size of the space between the lower part of the housing 20 and the hinge unit 30, it is possible to match the charging terminal unit 15 of the second battery pack 110 and the charging connector unit 50 with each other by moving the charging connector unit 50 by the hinge unit 30.

Therefore, the battery pack management system 1 according to the present embodiment is configured such that, when the battery pack 10 is inserted through the inlet port 21 of the housing 20, the hinge unit 30 can move the charging connector unit 50 if the battery pack 10 is equal to or larger than a predetermined size. In addition, the predetermined size may mean the size of the space between the lower part of the housing 20 and the hinge unit 30, and when a battery pack 10 larger than the predetermined size, for example, a second battery pack 12, is inserted into the battery pack management system 1, the charging connector unit 50 may be moved by the hinge unit 30.

Meanwhile, the hinge unit 30 included in the battery pack management system 1 according to the present embodiment may be formed adjacent to an upper part of the housing 20. In one example, the hinge unit 30 may be formed on an inner side surface of the upper part of the housing 20 so that it is adjacent to the inlet port 21 of the housing 20 into which the battery pack 10 is inserted. Therefore, due to the insertion of the battery pack 10, the battery pack 10 and the hinge unit 30 can come into contact with each other inside the housing 20, so that the hinge unit 30 can be moved in accordance with the contact.

At this time, the hinge unit 30 may include a hinge rotation unit 31 that contacts the battery pack 10 when the battery pack 10 is inserted, and a hinge fixing portion33 that is connected with the hinge rotation unit 31 and determines a maximum value of a rotation radius of the hinge rotation unit 31.

In addition, the hinge unit 30 may further include a wire pulling plate 35 that is connected to the wire 40 and rotates together with the hinge rotation unit 31, and a rail portion 37 to which one end of the wire pulling plate 35 moves.

At this time, a sliding portion 35s may be formed at one end part of the wire pulling plate 35, and the sliding portion 35s moves along the rail portion 37, so that the wire pulling plate 35 can move. Therefore, the sliding portion 35s may be formed to include a wheel member, but is not limited thereto.

Next, a second operating state of the battery pack management system 1 in which the second battery pack 12 is inserted into the housing 20 will be described in detail.

Referring to Fig. 5, when the second battery pack 12 is inserted into the housing 20, the hinge unit 30 pulls the wire 40, and the charging connector unit 50 connected to the wire 40 can be uplifted. Therefore, the charging connector unit 50 can be uplifted to correspond to the position of the charging terminal unit 15 of the second battery pack 12 where the charging terminal unit 15 is located on the upper side than the first battery pack 11. As a result, the charging connector unit 50 and the charging terminal unit 15 of the second battery pack 12 may be arranged to correspond to each other.

Referring to Fig. 6, in the second operation state, the hinge rotation unit 31 of the hinge unit 30 may rotate upward of the housing 20 through insertion of the second battery pack 12. At this time, the maximum value of the rotation radius of the hinge rotation unit 31 may be determined by the hinge fixing portion 33. Therefore, the hinge rotation unit 31 can rotate up to a radius at which one surface of the hinge rotation unit 31 comes into contact with the hinge fixing portion 33. Therefore, the rotation radius of the hinge rotation unit 31 is adjusted by the hinge fixing portion 33, thereby being able to prevent the hinge rotation unit 31 from rotating more than necessary.

At this time, the hinge rotation unit 31 may be connected to the wire pulling plate 35. Also, one end of the wire pulling plate 35 can move along the rail portion 37. That is, the wire pulling plate 35 rotates together with the rotation of the hinge rotation unit 31, so that one end of the wire pulling plate 35 can move along the rail portion 37. In addition, one end of the wire pulling plate 35 moves along the rail portion 37 and can pull the wire 40. At this time, since a sliding portion 35s may be formed at one end of the wire pulling plate 35, the sliding portion 35s of the wire pulling plate 35 can move along the rail portion 37 and can pull the wire 40.

The wire 40 may be formed along the outer surface of the housing 20. At this time, the wire 40 may be formed on the upper part and side surface parts of the housing 20. A pulley 45 may be formed on the outer surface of the housing 20, and the wire 40 may be extended to the upper part and side surface of the housing 20 through the pulley 45 and connected to the charging connector unit 50.

Therefore, when the wire 40 is pulled by the wire pulling plate 35, the movement of the wire 40 becomes smooth through the pulley 45, so that charging connector unit 50 connected to the wire 40 can move smoothly to the upper side.

The rail portion 37 may be formed in a direction opposite to the charging connector unit 50. Therefore, the wire pulling plate 35 can move in the direction opposite to the charging connector unit 50 along the rail portion 37 to pull the wire 40, and the wire 40 can be moved so that the charging connection 50 is uplifted to an upper side. At this time, the opposite direction means that the moving direction of the wire pulling plate 35 moving along the rail part 37 is opposite to the direction in which the charging connector unit 50 is formed, and the rail portion 37 may also be formed in a direction opposite to the direction in which the charging connector unit 50 is formed. Therefore, since the charging connector unit 50 is connected to the wire 40, the position of the charging connector unit 50 may be changed by the wire 40.

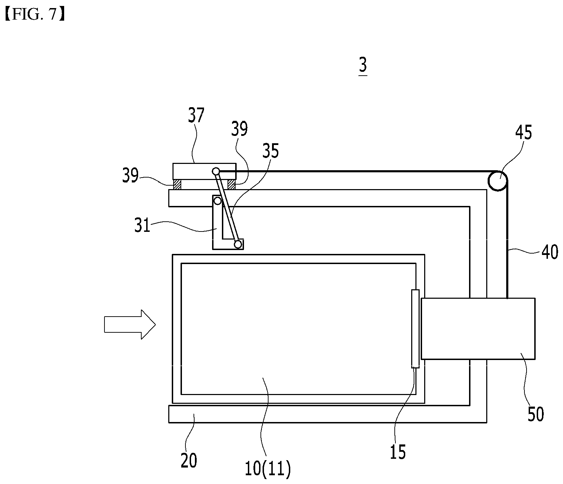

Fig. 7 is a diagram showing a battery pack management system according to another embodiment of the present disclosure. Referring to Fig. 7, the battery pack management system 3 according to the present embodiment may further include a fixing portion 39. The rail portion 37 may be formed to be adjacent to the upper part of the housing 20, and thus, may be fixed to the housing 20 by the fixing portion 39 if it is formed to be separated from the upper part of the housing 20.

At this time, the fixing portion 39 may be formed in the lower part of the rail portion 37 to fix the rail part 37 onto the housing 20. Further, the fixing portion 39 may be formed by a single or a plurality of numbers in order to fix the rail portion 37. Referring to Fig. 7, it may be formed by a plurality of numbers at the lower end of the rail portion 37. The fixing portion 39 formed by a plurality of numbers fixes the rail portion 37 onto the housing 20, so that the sliding portion 35s of the wire pulling plate 35 can stably move along the rail portion 37.

The battery pack management systems 1 and 3 according to the present embodiment may enable smooth charging of battery packs 10 having different sizes in which charging terminal units 15 are formed at mutually different positions by moving the hinge unit 30 depending on the size of the battery pack 10 inserted into the housing 20, and raising the charging connector unit 50. Accordingly, battery packs of different sizes can be fully charged, and fully charged battery packs of various sizes can be provided to users, thereby achieving the effect of maximizing space efficiency and user convenience.

While the preferred embodiments of the present disclosure have been illustrated and described above, the present disclosure is not limited to the aforementioned specific embodiments, various modifications and improvements can be made by those skilled in the art without departing from the subject matters of the present disclosure that are defined in the appended claims, and these modifications should not be appreciated individually from the technical spirit or prospect of the present disclosure

### [Description of Reference Numerals]

1: battery pack management system
10: battery pack
11: first battery pack
12: second battery pack
20: housing
21: inlet port
30: hinge unit
31: hinge rotation unit
33: hinge fixing portion
35: wire pulling plate
37: rail portion
39: fixing portion
40: wire
50: charging connector unit

## Claims

1. A battery pack management system comprising:
a housing in which a battery pack is housed;
a hinge unit formed in the housing; and
a charging connector unit connected by a hinge unit and a wire,
wherein, when the battery pack is inserted through an inlet port of the housing, the hinge unit moves the charging connector unit if the battery pack is equal to or larger than a predetermined size.

2. The battery pack management system of claim 1, wherein:
the hinge unit is formed adjacent to an upper part of the housing.

3. The battery pack management system of claim 2, wherein:
the hinge unit is formed on an inner side surface of the upper part of the housing.

4. The battery pack management system of claim 1, wherein:
if the size of the battery pack is larger than the size of a space between the lower part of the housing and the hinge unit, the hinge unit moves the charging connector unit.

5. The battery pack management system of claim 1, wherein:
the hinge unit pulls the wire, and the charging connector unit connected to the wire is uplifted, so that the charging connector unit and the charging terminal unit of the battery pack are arranged to correspond to each other.

6. The battery pack management system of claim 1, wherein:
the hinge unit comprises,
a hinge rotation unit that contacts the battery pack when the battery pack is inserted, and
a hinge fixing portion that is connected to the hinge rotation unit and determines a maximum value of a rotation radius of the hinge rotation unit.

7. The battery pack management system of claim 6, wherein:
the hinge unit further comprises,
a wire pulling plate that is connected to the wire and rotates together with the hinge rotation unit, and
a rail portion to which one end of the wire pulling plate moves.

8. The battery pack management system of claim 7, wherein:
the wire pulling plate comprises a sliding portion that moves along the rail portion.

9. The battery pack management system of claim 7, wherein:
"the hinge unit moves the charging connector unit" means that the wire pulling plate moves along the rail portion and raises the charging connector unit.

10. The battery pack management system of claim 7, wherein:
the rail portion is formed in a direction opposite to the charging connector unit,
the wire pulling plate moves along the rail portion in a direction opposite to the charging connector unit, and the wire moves, and
the position of the charging connector unit is changed by the wire.

11. The battery pack management system of claim 7, wherein:
the rail portion is formed to be adjacent to the upper part of the housing, and
the rail portion is fixed onto the housing by a fixing part.

12. The battery pack management system of claim 1, wherein:
the battery pack management system comprises a battery swapping system.
